# EUROPÄISCHE PATENTSCHRIFT

(11) **EP 0 894 682 B1**
(45) Veröffentlichungstag und Bekanntmachung des Hinweises auf die Patenterteilung: **21.09.2005**
(21) Anmeldenummer: 98112119.7
(22) Anmeldetag: 01.07.1998
(51) Int. Cl.: B60R 25/00

(54) **Fahrzeug mit einem tragbaren Fernbedienungs-Sender und einem Schlüssel sowie Verfahren zum Gebrauch dieses Fahrzeugs**
Vehicle with a portable remote control transmitter and a key and method for use of the vehicle
Véhicule avec dispositif de commande à distance portable et clef ainsi que procédé d'utilisation du véhicule

(30) Priorität: 11.07.1997 DE 19729867
(43) Veröffentlichungstag der Anmeldung: 03.02.1999
(73) Patentinhaber: Bayerische Motoren Werke Aktiengesellschaft, 80788 München (DE)
(72) Erfinder: Bartz, Ruediger, 80809 München (DE)

(56) Entgegenhaltungen:
- EP-A- 0 767 286
- EP-A- 0 770 524
- DE-A- 4 141 504
- DE-A- 4 238 301
- DE-A- 4 433 499
- US-A- 5 602 426

## Beschreibung

Die Erfindung bezieht sich auf ein Fahrzeug mit den Merkmalen des Oberbegriffs von Patentanspruch 1 sowie auf ein Verfahren zum Gebrauch eines derartigen Fahrzeugs.

Ein derartiges Fahrzeug ist allgemein bekannt, z.B. EP 0 770 524 A1.

Besitzt das Fahrzeug mehrere tragbare Fernbedienungs-Sender, die alternativ zum Entriegeln der Zentralverriegelungsanlage einsetzbar sind sowie mehrere Schlüssel, die wahlweise zum Freischalten der elektronischen Wegfahrsicherung benutzt werden können, so ergibt sich im Rahmen der Personalisierung ein Problem. Unter Personalisierung ist dabei die Möglichkeit zu verstehen, personenbezogene Einstell-Werte für Ausrüstungsteile, wie Heiz- und Klimaanlage, Innen- und Außenspiegel, Sitzlehne, Nackenstütze usw. individuell zu wählen und bei der erneuten Benutzung des Fahrzeugs diese Ausrüstungsteile wieder entsprechend einzustellen.

Bedingt durch die Möglichkeit, Sender und Schlüssel beliebig auszuwählen und damit das Fahrzeug zu benutzen, lassen sich die abgespeicherten Einstell-Werte für die Ausrüstungsteile dem jeweiligen Fahrzeugbenutzer nicht ohne weiteres zuordnen. Damit besteht beispielsweise nicht die Möglichkeit, bei Benutzen des Fernbedienungs-Senders die Ausrüstungsteile passend für den jeweiligen Benutzer einzustellen. Damit aber geht ein entscheidender Vorteil verloren, der sich aus der prinzipiellen Möglichkeit ergibt, die Ausrüstungsteile bereits vor Inbetriebnahme des Fahrzeugs individuell auf die Wünsche und Bedürfnisse des jeweiligen Benutzers einzustellen.

Der Erfindung liegt die Aufgabe zugrunde, ein Fahrzeug der eingangs genannten Art zu schaffen, bei dem die Einstellwerte möglichst optimal dem jeweiligen Fahrzeugbenutzer zugeordnet werden und gleichzeitig das Verfahren hierfür möglichst ökonomisch zu gestalten.

Die Erfindung löst diese Aufgabe für das Fahrzeug selbst mit den Mitteln des Patentanspruchs 1 und für das Verfahren mit den Mitteln des Patentanspruchs 2.

Wesentlich im Rahmen der Erfindung ist nunmehr die Zuordnung der personenbezogenen Einstellwerte zu dem jeweiligen Schlüssel, der bei der letzten Benutzung des Fahrzeugs in Gebrauch war. Über die im Speicher hinterlegte Information wird der Schlüssel-Nummer die Nummer des Fernbedienungs-Senders zugeordnet. Wird ein Fernbedienungs-Sender betätigt und damit die Zentralverriegelungsanlage entriegelt, so wird aufgrund der hinterlegten Zuordnung die dem zugehörigen Schlüssel zugeordneten Einstellwerte vorausgewählt und gegebenenfalls die Einstellung der Ausrüstungsteile in der zugehörigen Weise vorgenommen. Handelt es sich dabei bei dem Fernbedienungs-Sender um den Sender, der im Speicher dem zugehörigen Schlüssel zugeordnet ist, werden die Ausrüstungsteile tatsächlich in der Art eingestellt, wie dies vom Fahrzeugbenutzer auch erwartet wird. Die Einstellung ist identisch mit der Einstellung der Ausrüstungsteile bei der letzten Benutzung des Fahrzeugs durch diesen Benutzer.

Wird der Fernbedienungs-Sender eines anderen Benutzers dazu verwandt, die Zentralverriegelungsanlage zu entriegeln, so entsprechen die Einstell-Werte nicht mehr den Werten, die vom Fahrzeugbenutzer erwartet werden. Andererseits ist es für das Fahrzeug auch nicht erkennbar, welcher Schlüssel zu welchem Fernbedienungs-Sender gehört. Erst durch die Zuordnung der Einstell-Werte zur Nummer des Schlüssels werden dann die Einstell-Werte entsprechend dem für den tatsächlich benutzten Schlüssel hinterlegten Einstell-Werten zugeordnet und die Ausrüstungsteile in der durch diese Werte festgelegten Art und Weise eingestellt.

Werden, bedingt durch die Benutzung eines anderen Fernbedienungs-Senders vor der Benutzung des Schlüssels die diesem Sender zugeordneten Einstell-Werte eingestellt, so werden diese bei Benutzen des Schlüssels soweit wie möglich geändert. Es handelt sich dabei in der Regel um die Ausrüstungsteile, deren Einstellung auch noch nach der unmittelbaren Inbetriebnahme des Fahrzeugs geändert werden können. Hierzu zählen beispielsweise Außen- und Innenspiegel und die Heiz- und/oder Klimaanlage. Andere Ausrüstungsteile, wie z.B. der Sitz werden vom Benutzer selbst in ihrer Einstellung verändern und werden auch bei Verwendung eines anderen, nicht dem benutzten Fernbedienungssender zugeordneten Schlüssel nicht mehr verstellt.

Die Einstell-Werte können nun auf unterschiedlich Weise weiterbehandelt werden. Handelt es sich um Einstell-Werte, die identisch sind mit den für den jeweiligen Schlüssel hinterlegten Einstell-Werte, so werden diese Werte damit bestätigt und eine irgendwie geartete Änderung ist nicht erforderlich. Werden hingegen die Einstell-Werte unterschiedlich zu den hinterlegten Werten eingestellt, so können die geänderten Werte anstelle der gespeicherten Werte bleibend festgehalten werden. Alternativ können diese Einstell-Werte nur vorübergehend bis zur nächsten Benutzung des Fahrzeugs durch denselben Benutzer gespeichert werden und bei der nächsten Benutzung dann tatsächlich wieder zunächst und weiterhin bleiben gespeicherten Einstell-Werte eingestellt werden.

Für die im Rahmen der Erfindung vorgesehene Abspeicherung der Zuordnung von Fernbedienungs-Sender-Kennummern und Schlüssel-Kennummern kann es vorteilhaft sein, diese Zuordnung erst beispielsweise im Rahmen des Fertigungsprozesses oder sogar nachträglich beispielsweise bei Austausch eines Senders und/oder Schlüssels individuell vorzunehmen. Unter individuell ist dabei die Zuordnung von Kennummern eines Fernbedienungs-Senders und eines Schlüssels zu verstehen. Diese Zuordnung kann mit Hilfe eines Initialisierungsmodus erfolgen. Dabei kann in einem zeitlichen Abstand von definierter Länge, beispielsweise 10 Sekunden nach dem Betätigen eines der beiden Teile Schlüssel oder Sender das andere Teil betätigt werden und die bei dem Betätigen der beiden Teile ausgegebenen Kennummern bleibend im Fahrzeug abgespeichert werden.

Alternativ ist es auch möglich, bereits herstellungsseitig diese Zuordnung von Kennummern von Sendern und Schlüsseln vorzunehmen. Daraus resultiert jedoch das Problem, bei einem nachträglichen Austausch beispielsweise nur des Senders oder nur eines Schlüssels das ausgetauschte Teil mit einem verbleibenden Teil Schlüssel oder Sender, herzustellen. Durch den Initialisierungsmodus ist diese Zuordnung jederzeit problemlos möglich.

Ein weiteres Problem wird durch die Erfindung gelöst. Es resultiert aus der Möglichkeit, während der Inbetriebnahme des Fahrzeugs versehentlich erneut den Fernbedienungs-Sender oder aber einen anderen Fernbedienungs-Sender zu betätigen. In beiden Fällen wird die häufig unerwünschte Veränderung der Einstell-Werte bzw. auch das Betätigen von Teilen der Zentralverriegelungs-Anlage unterbunden, wenn bei Betätigen des Schlüssels ein anschließend ausgegebener Fernbedienungs-Befehl nicht oder zumindest nur teilweise realisiert wird.

Im Falle einer Zentralverriegelungs-Anlage kann dies bedeuten, daß durch das neute Aufgeben eines Fembedienungsbefehls mit dem Fernbedienungs-Sender, dessen Schlüssel betätigt ist, z.B die Heckklappe verriegelt werden kann. Wird hingegen ein Fernbedienungsbefehl mit einem Sender aufgegeben, dessen Schlüssel nicht betätigt ist, so kann dann die Heckklappe nur entriegelt werden. Dadurch werden Befehle, die versehentlich ausgegeben werden, nicht bzw. nur insoweit realisiert, wie es sinnvoll ist.

Ebenso ist es möglich, das Ändern von Einstell-Werten der Ausrüstungsteile durch Betätigen eines zweiten Fernbedienungs-Senders zu vermeiden, wenn das Fahrzeug durch Betätigen des Schlüssels in Betrieb genommen ist. Für den Fahrzeugbenutzer, der den zweiten Fernbedienungs-Sender betätigt, ergibt sich daraus zwar eine gewisse Komforteinbuße, da er nicht mehr in der Lage ist, die Einstell-Werte der Ausrüstungsteile zu verändern. Andererseits aber ergibt sich der Vorteil, daß eine irgendwie geartete Wechselwirkung mit den Einstell-Werten, die sich aufgrund der ersten Benutzung eines Fernbedienungs-Senders einstellen, vermieden wird und eine mögliche Irritation des ersten Fahrzeugbenutzers damit unterbleibt.

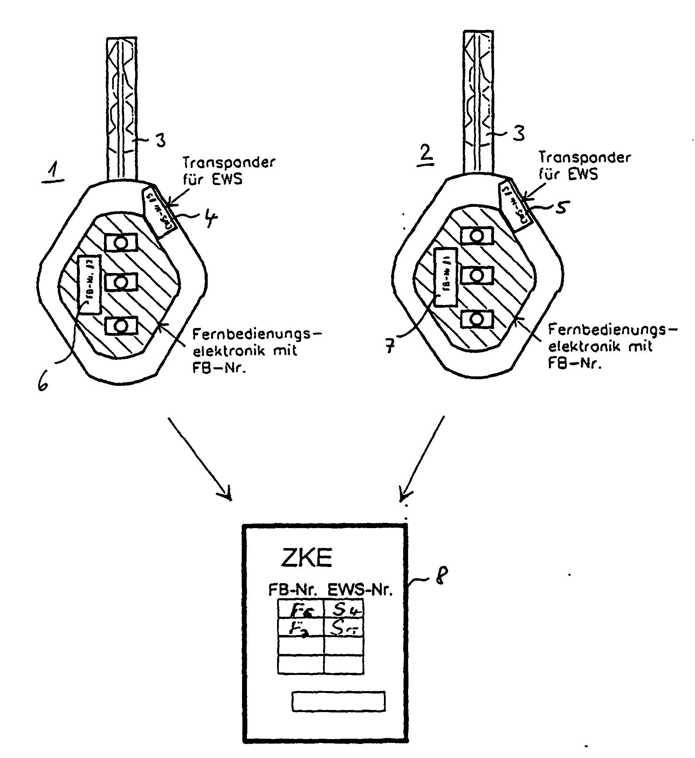

Anhand der Zeichnung ist die Erfindung weiter erläutert. Die einzige Figur zeigt den inneren Aufbau zweier Zugangsmodule 1 und 2 für ein Kraftfahrzeug. Jedes der Module enthält zusätzlich zu einem mechanischen und bei beiden Modulen identischen Schlüssel 3 einen elektronischen Schlüssel 4 bzw. 5 (für die elektronische Wegfahrsicherung) mit einer Kennummer S₄ bzw. S₅ sowie einen Fernbedienungs-Sender 6 bzw. 7 mit einer Kennummer F₆ bzw. F₇.

Da herstellungsbedingt keine Korrelation zwischen den Kennummern eines Moduls S₄, F₆ einerseits und S₅, F₇ andererseits besteht und auch nicht gewährleistet ist, daß immer nur die mechanisch miteinander verbundenenen Teile 4 und 6 bzw. 5 und 7 zusammen betätigt werden, wird zunächst bei der Initialisierung (am Band oder in einer Werkstatt) eine Zuordnung vorgenommen. In einem Initialisierungsmodus werden die innerhalb einer vorgegbenen Zeit von einigen Sekunden nacheinander aufgenommenen Kennummern eines Schlüssels und eines Fembedienungssenders in einem Speicher 8 festgehalten.

Danach vorgenommene individuelle Einstellungen von Ausrüstungsteilen (nicht dargestellt), werden dann diesen Kennummerndoppeln S₄/F₆ bzw. S₅/F₇ zugeordnet, wenn im Zusammenhang mit diesen Einstellungen der Schlüssel 4 bzw. 5 benutzt wird.

Ein Fernbedienungsbefehl für die Zentralverriegelungseinrichtung des Fahrzeugs, der mit dem Sender 6 bzw. 7 aufgegben wird, führt dann zu einer Einstellung der Ausrüstungsteile gemäß den Werten, die für diesen Sender, z.B. 6 und den Schlüssel, hier 4 gespeichert sind. Wird nun nicht wie erwartet der Schlüssel 4, sondern der Schlüssel 5 benutzt und das Fahrzeug in Betrieb gesetzt, werden die dem Sender 5 zugeordneten Einstellwerte nicht realisiert. Es werden lediglich die bei Beendigung des Betriebs vorhandenen Einstellwerte dem Kennummerndoppel S₅/F₇ zugeordnet und ggf. bereits im Speicher 8 vorhandenen Werte überschrieben. Diese Werte ergeben sich aufgrund ggf. vom Fahrzeugbenutzer vorgenommener manueller Einstellmaßnahmen.

Innerhalb des Zeitraums, während der der Schlüssel, hier 5 benutzt wird, ist es nicht oder nur insoweit, als dies sinnvoll ist, möglich, einen Fernbedienungsbefehl mit einem der Sender 6 oder 7 aufzugeben.

Damit kann trotz zunächst nicht bestehender funktionaler Zuordnung von Schlüssel und Sender eine Personalisierung von Einstellungen für Ausrüstungsteile vorgenommen werden und bei Benutzen eines Schlüssels und/oder eines Senders weitgehend die gewünschte Einstellung erzielt werden.

## Patentansprüche

1. Fahrzeug mit einem tragbaren Fernbedienungs-Sender und mit einem damit verbundenen Schlüssel, der eine auslesbare Identifizierungs-Information zum Entriegeln einer elektronischen Wegfahrsicherung besitzt, und mit personenbezogenen Einstellwerten von Ausrüstungsteilen, **dadurch gekennzeichnet, daß** der Fernbedienungs-Sender (6, 7) und der Schlüssel (4, 5) voneinander unabhängige Kenn-Nummern (F₆/S₄ bzw. S₇/F₅) besitzen, daß in einem Speicher (8) die Kenn-Nummern der Schlüssel und die zugehörigen Kenn-Nummern der Sender hinterlegt sind und daß die personenbezogenen Einstellwerte der Kenn-Nummer des Schlüssels zugeordnet sind.

2. Verfahren zum Gebrauch der Vorrichtung nach Patentanspruch 1, **dadurch gekennzeichnet, daß** bei Eingabe eines Fembedienungs-Befehls auch die Kenn-Nummer des Fernbedienungs-Senders eingegeben wird und daß aufgrund der hinterlegten Zuordnung die dem zugehörigen Schlüssel zugeordneten Einstellwerte eingestellt werden.

3. Verfahren nach Anspruch 2, **dadurch gekennzeichnet, daß** dann, wenn anschließend der zugehörige Schlüssel betätigt wird, die Einstellwerte beibehalten werden.

4. Verfahren nach Anspruch 3, **dadurch gekennzeichnet, daß** bei einer anschließenden Änderung der Einstellwerte die geänderten Werte der Schlüssel-Kennnummer zugeordnet werden.

5. Verfahren nach einem der Ansprüche 2 bis 4, **dadurch gekennzeichnet, daß** dann, wenn anschließend nicht der zugehörige, sondern ein anderer Schlüssel betätigt wird, die dem tatsächlich betätigten Schlüssel zugeordneten Einstellwerte zumindest teilweise realisiert werden.

6. Verfahren nach einem der Ansprüche 2 bis 5, **dadurch gekennzeichnet, daß** für die Zuordnung von Schlüssel- und Sender-Kenn-Nummern ein Initialisierungsmodus vorgesehen ist, bei dem nach Betätigen des einen Teils innerhalb einer vorgegeben Zeitspanne das andere Teil bestimmungsgemäß zu betätigen ist und in dem Speicher die bei Betätigen der beiden Teile mitausgegebenen Nummern als zugehörig gespeichert werden.

7. Verfahren nach einem der Ansprüche 2 bis 6, **dadurch gekennzeichnet, daß** bei Betätigen des Schlüssels das Auslösen von Änderungen der Einstellwerte bei Betätigen eines Fernbedienungs-Senders zumindest teilweise unterbunden wird.

## Claims

1. A vehicle comprising a portable remote control transmitter and a key connected therewith, having readable identification information for unlocking an electronic immobiliser, and comprising person-related adjustment values for equipment parts, **characterised in that** the remote control transmitter (6, 7) and the key (4, 5) have identification numbers (F₆/S₄ or S₇/F₅) which are independent of one another, **in that** the identification numbers of the key and the associated identification numbers of the transmitters are filed in a memory and **in that** the person-related adjustment values are allocated to the identification number of the key.

2. A method for using the device according to claim 1, **characterised in that** when a remote control command is input, the identification number of the remote control transmitter is also input and **in that** the adjustment values allocated to the associated key are adjusted on the basis of the allocation filed.

3. A method according to claim 2, **characterised in that** when the associated key is subsequently operated, the adjustment values are retained.

4. A method according to claim 3, **characterised in that** on a subsequent change of the adjustment values, the changed values are allocated to the key identification number.

5. A method according to any one of claims 2 to 4, **characterised in that** if another key, not the associated key, is subsequently operated, the adjustment values allocated to the key actually operated are at least partially implemented.

6. A method according to any one of claims 2 to 5, **characterised in that**, to allocate key and transmitter identification numbers, an initialisation mode is provided, in which, after operation of the one part, within a predetermined time span the other part is to be operated as intended and the numbers output on operation of the two parts are stored as associated in the memory.

7. A method according to any one of claims 2 to 6, **characterised in that** on operation of the key, the triggering of changes to the adjustment values on operation of a remote control transmitter is at least partially prevented.

## Revendications

1. Véhicule comportant un émetteur de commande à distance portable et une clé associée à celui-ci qui possède une information d'identification lisible pour désactiver une sécurité anti-démarrage, et des valeurs de réglage d'éléments d'équipement relatives à une personne,
**caractérisé en ce que**
l'émetteur de commande à distance (6, 7) et la clé (4, 5) présentent des numéros d'identification (F₆/S₄ ou S₇/F₅) indépendants les uns des autres, les numéros d'identification des clés et les numéros d'identification des émetteurs associés sont stockés dans une mémoire (8), et les valeurs de réglage concernant une personne sont affectées au numéro d'identification de la clé.

2. Procédé pour utiliser le dispositif selon la revendication 1,
**caractérisé en ce qu'**
en entrant un ordre de commande à distance le numéro d'identification de l'émetteur de commande à distance est également entré, et en raison de l'affectation stockée les valeurs de réglage affectées à la clé associée sont réglées.

3. Procédé selon la revendication 2,
**caractérisé en ce que**
les valeurs de réglage sont conservées lors d'un actionnement ultérieur de la clé associée.

4. Procédé selon la revendication 3,
**caractérisé en ce que**
lors d'une modification suivante des valeurs de réglage les valeurs modifiées sont affectées au numéro d'identification de la clé.

5. Procédé selon l'une quelconque des revendications 2 à 4,
**caractérisé en ce que**
les valeurs de réglage affectées à la clé effectivement actionnée sont du moins réalisées partiellement si ensuite une autre clé que celle associée est actionnée.

6. Procédé selon l'une quelconque des revendications 2 à 5,
**caractérisé en ce que**
pour l'affectation des numéros d'identification de la clé et de l'émetteur un mode d'initialisation est prévu dans lequel après l'actionnement d'un des éléments l'autre élément doit être actionné de façon appropriée à l'intérieur d'un intervalle de temps prédéterminé, et les numéros également émis lors de l'actionnement des deux éléments sont stockés dans la mémoire comme étant associés.

7. Procédé selon l'une quelconque des revendications 2 à 6,
**caractérisé en ce que**
lors de l'actionnement de la clé le déclenchement de modifications des valeurs de réglage lors de l'actionnement d'un émetteur de commande à distance est du moins partiellement entravé.
